# EUROPEAN PATENT APPLICATION

(11) **EP 3 616 938 A1**
(43) Date of publication of application: **04.03.2020**
(21) Application number: 18790994.0
(22) Date of filing: 20.04.2018
(51) Int. Cl.: B44C 1/22

(54) **DECORATIVE COMPONENT**

(30) Priority: 27.04.2017 JP 2017088505
(71) Applicant: Kyocera Corporation, Kyoto-shi, Kyoto 612-8501 (JP)
(72) Inventor: HAYASHI, Shinichi, Kyoto-shi Kyoto 612-8501 (JP); HODATE, Tetsumi, Kyoto-shi Kyoto 612-8501 (JP)
(74) Representative: Viering, Jentschura & Partner mbB Patent- und Rechtsanwälte
(86) International application number: PCT/JP2018/016331
(87) International publication number: WO 2018/198983

(57) **Abstract**

A decorative part of the present disclosure includes a decorative surface. The decorative surface has a kurtosis Rku, which is acquired from a roughness profile, larger than 3, and a profile section height difference Rδc in a height direction between a material ratio Rmr of a cut level of 25% and a material ratio Rmr of a cut level of 75%, which is acquired from the roughness profile, equal to or larger than 0.3 µm.

## Description

### Field

The present disclosure relates to a decorative part.

### Background

For decorative parts that need to a have non-glare appearance, formation of microscopic asperities on a surface to form a decoration has been performed. A surface on which these microscopic asperities are formed is generally called "matte surface".

As a decorative part having such a matte surface, Patent Literature 1 discloses a decorative part having a matte surface that satisfies conditions that asperities with uneven depths and heights are formed, and the asperities with uneven depths and heights include 7 to 100 protrusions having height exceeding 2 from a mean line, assuming that a value of an arithmetical mean roughness Ra of a matte surface measured a sampling length as 10 mm is 1.

### Citation List

### Patent Literature

Patent Literature 1: Japanese Patent Application Laid-open No. 2012-40700

### Summary

A decorative part of the present disclosure includes a decorative surface. This decorative surface has a kurtosis Rku, which is acquired from a roughness profile, larger than 3, and a profile section height difference Rδc in a height direction between a material ratio Rmr of a cut level of 25% and a material ratio Rmr of a cut level of 75%, which is acquired from the roughness profile, equal to or larger than 0.3 µm.

### Description of Embodiments

Because matte surfaces have microscopic asperities on surfaces, there has been a problem that disfigurement is caused if sebum adhered when people touch them remains in concave portions. Specifically, sebum from when a person touches adheres as a fingerprint. For that, a decorative part is now desired that is less prone to get sebum remaining thereon when a person touches it, and that has a decorative surface on which sebum is less noticeable even if it remains thereon, so that the disfigurement is not caused even after long use.

The decorative part of the present disclosure has a decorative surface that is less prone to get sebum remaining thereon when a person touches it, and also on which sebum is less noticeable even if sebum remains thereon. Hereinafter, the decorative part of the present disclosure will be described in detail.

The decorative part of the present disclosure has a decorative surface. This decorative surface has kurtosis Rku, which is acquired from a roughness profile, larger than 3, and has a profile section height difference Rδc in a height direction between a material ratio Rmr of a cut level of 25% (hereinafter, it is referred to as material ratio Rmr25 for discrimination in some cases) and a material ratio Rmr of a cut level of 75% (hereinafter, it is referred to as material ratio Rmr75 for discrimination in some cases), which is acquired from a roughness profile, is 0.3 µm or larger.

Kurtosis Rku herein is defined in JIS B 0601 (2001), and is an index indicating kurtosis that is a scale for measuring acuteness of a surface. When this kurtosis Rku is larger than 3, portions close to the apex of a portion to be a profile peak and a portion to be a profile valley have a pointy shape.

Moreover, material ratio Rmr is a ratio expressed in percentage of a sum of a cut length that is obtained, extracting a sample from a roughness profile for a sampling length in a direction of an mean line, when the roughness profile of the sample portion is cut at a cut level parallel to a peak line relative to the sampling length. The cut level herein is a ratio of a height expressed in percentage relative to a maximum height (a sum of a maximum profile peak height and a maximum profile valley depth indicated in JIS B 0601 (2001)) in the above sampling length. That is, the material ratio Rmr of a cut level of 0% is 0%, and the material ratio Rmr of a cut level of 100% is 100%.

Furthermore, the profile section height difference Rδc in a height direction between the material ratio Rmr25 and the material ratio Rmr75 indicates a difference in a cut level of a distance between a height corresponding to the material ratio Rmr25 and a height corresponding to the material ratio Rmr75.

The decorative surface in the decorative part of the present disclosure is less prone to get sebum remaining on a slope toward a bottom of a portion to be a profile valley of the decorative surface (hereinafter, referred to as valley bottom) when a person touches the decorative surface because the kurtosis Rku is larger than 3. On the other hand, when the kurtosis Rku of the decorative surface is 3 or smaller, sebum is likely to remain on the slope toward the valley bottom of the decorative surface.

Furthermore, because the decorative surface of the decorative part of the present disclosure has the profile section height difference Rδc equal to or larger than 0.3 µm, if sebum remains on a slope toward the valley bottom, it has a surface property of making this sebum less noticeable. On the other hand, when the profile section height difference Rδc in a height direction between the material ratio Rmr25 and the material ratio Rmr75 of the decorative surface is smaller than 0.3 µm, when sebum remains on a slope toward the valley bottom, this sebum is easy to be seen, and the remaining sebum is noticeable.

Thus, because the decorative part of the present disclosure meets the above structural condition, it is less prone to getting sebum remaining thereon when a person touches it, and also makes sebum, even if it remains thereon, less noticeable.

Moreover, when the decorative surface has the profile section height difference Rδc in a height direction between material ratio Rmr25 and the material ratio Rmr75 equal to or larger than 0.5 µm, even if sebum remains on a slope toward a valley bottom, the remaining sebum is further less noticeable.

The kurtosis Rku, the profile section height difference Rδc in a height direction between the material ratio Rmr25 and the material ratio Rmr75 can be acquired by measurement in conformity with JIS B 0601 (2001). As measurement conditions, for example, using a laser microscope, a measurement mode is set to color ultra-depth, a magnification is set to 1000 times, a pitch is set to 0.02 µm, and a gain is set to 953. Furthermore, on the decorative surface, at least five portions having small inclination compared to other portions are measured. An average value of data after excluding data indicating a largest value and data indicating a smallest value from measurement data is acquired.

Moreover, the decorative surface of the present disclosure may have a ten point height of roughness profile Rz, which is acquired from a roughness profile, equal to or larger than 3 µm and smaller than 8 µm. The ten point height of roughness profile Rz is defined in JIS B 0601 (2001), and expresses a sum of an average of height of portions to be profile peaks having the highest profile peak height to the fifth height and an average of depths of portions to be profile valleys having the deepest profile depth to the fifth depth in a roughness profile of a sample portion, extracting a sample from the roughness profile for a sampling length in a direction of an mean line. When such a structural condition is met, the decorative surface becomes less prone to get sebum remaining on a slope toward an apex of a portion to be a valley bottom or a profile peak (hereinafter, referred to as peak apex), and makes sebum, even if sebum remains thereon, further less noticeable.

Furthermore, when the decorative surface has the arithmetical mean roughness Ra, which is acquired from a roughness profile, equal to or larger than 0.1 µm and smaller than 7 µm, the beauty appearance of the decorative part is improved.

Moreover, the decorative surface of the decorative part of the present disclosure may have a ratio Rq/Ra between the arithmetical mean roughness Ra, which is acquired from a roughness profile, and a root mean square roughness Rq, which is acquired from a roughness profile, equal to or smaller than 1.6. When such a structural condition is met, the decorative surface becomes less prone to get sebum remaining thereon when a person touches the decorative surface because the decorative surface has a small number of portions to be protruding profile peaks.

Furthermore, the decorative surface of a decorative member of the present disclosure may have a negative skewness Rsk, which is acquired from a roughness profile. Herein, the skewness Rsk is defined in JIS B 0601 (2001), and is an index indicating a ratio between portions to be profile peaks and portions to be profile valleys when a mean height of roughness is the center line. When the skewness Rsk is negative, it is indicated that a region of the portions to be profile peaks is larger than that of the portions to be profile valleys. When such a structural condition is met, on the decorative surface, inclination of a slope toward the valley bottom becomes large, and it makes, even if sebum remains on the slope toward the valley bottom when a person touches it, this sebum less noticeable.

Moreover, the decorative surface of the decorative member of the present disclosure may have a maximum profile valley depth Rv, which is acquired from a roughness profile, equal to or larger than 2 µm and equal to or smaller than 4 µm. Herein, the maximum profile valley depth Rv is defined in JIS B 0601 (2001), and is a largest depth of a portion to be a profile valley in the sampling length, extracting a sample of the sampling length in a direction of an mean line from the roughness profile. When such a structural condition is met, the decorative surface becomes not only less prone to get sebum remaining thereon when a person touches it, but also avoids dust and the like from entering the valley bottom and, therefore, disfigurement of the decorative surface is less likely to be caused.

Herein, the ten point height of roughness profile Rz, the arithmetical mean roughness Ra, the root square mean roughness Rq, the skewness Rsk, and the maximum profile valley depth Rv can be calculated by measurement by the same method as that of the kurtosis Rku and the profile section height difference Rδc described above.

Furthermore, the decorative part in the decorative part of the present disclosure may be made from any material, such as metal and resin, but if made from ceramics or cermet, the decorative part of the present disclosure becomes resistant to scratches, and less prone to be disfigured even after long use, and also gives a consumer a sense of quality appearance and aesthetic satisfaction.

As ceramics, for example, zirconia, alumina, silicon nitride, silicon carbide, or a compound of these can be used. As a method of forming the decorative surface with ceramics, a substrate of the decorative part may be manufactured using metal, resin, or the like as a member including the decorative surface, and its surface may be coated with ceramics, to form the decorative surface. Alternatively, a member including the decorative surface may be manufactured using ceramics, and may be joined with a substrate made from metal, resin, or the like. Alternatively, the decorative part itself may be manufactured with ceramics. Ceramics may include a pigment component for coloring. Moreover, examples of cermet include titanium compound, such as titanium carbide (TiC) or titanium nitride (TiN).

Furthermore, a material forming the decorative surface may be measured by an X-ray diffracting device (XRD: for example, D8 ADVANCE of Bruker AX), and may be identified by using a JCPDS card from an acquired value of 2θ (2θ is a diffraction angle). Note that by observing the decorative surface with a scanning electronic microscope (SEM), and by using an energy-dispersive x-ray spectrometer (EDS) equipped on the SEM, a material forming the decorative surface can be estimated also.

The decorative part of the present disclosure can be applied, of course, to accessories and furniture, and also to parts having many chances to be touched by hands of people, such as watches, mobile terminals, medical terminals, and door knobs, parts prone to get sebum remaining thereon, such as fingerprint-sensor lock releasing devices and door release buttons of a mobile vehicle of an automobile and the like, or to parts that are demanded to have decorative values.

Hereinafter, a manufacturing method of the decorative part of the present disclosure will be described. Note that a decorative part made from zirconia will be described herein as an example.

First, a sintered body of zirconia is prepared. Next, a grinding process is performed by using a surface grinder on a surface of the sintered body. Next, barreling is performed for processing duration equal to or longer than 10 hours and equal to or shorter than 60 hours with respect to a surface subjected to the grinding process.

At this time, by performing the grinding process by using a grinder wheel, the grit size of which is #400 or smaller, and then by performing the barreling by using abrasive grains, the grit size of which is #150 or smaller as a compound, the decorative part of the present disclosure in which the kurtosis Rku is larger than 3 and the profile section height difference Rδc in a height direction between the material ratio Rmr25 and the material ratio Rmr75 is equal to or larger than 0.3 µm on a decorative surface can be obtained. Note that a material of the abrasive grains used in the barreling may be a material, such as green carborundum, and boron carbide.

Moreover, to make the ten point height of roughness profile Rz on the decorative surface equal to or larger than 3 µm and equal to or smaller than 8 µm, the barreling is performed by using a grindstone in a triangle pole shape.

Furthermore, to make the ratio Rq/Ra between the arithmetical mean roughness Ra and the root mean square roughness Rq equal to or smaller than 1.6, the barreling is performed for 20 hours or longer.

Moreover, to make the skewness Rsk of the decorative surface negative, boron carbide that has a higher hardness than green carborundum is used as a material of the abrasive grains used in the barreling.

Furthermore, to make the maximum profile valley depth Rv of the decorative surface equal to or larger than 2 µm and equal to or smaller than 4 µm, zero cut is performed for two to four times after the grinding process described above. Herein, zero cut is a processing method in which a grinding wheel is moved along a direction parallel to the surface on which the grinding process has been performed from one end to the other end of this surface without giving any cut. One movement from one end to the other end on a surface subjected to the grinding processing is expressed as performing zero cut once.

### Example 1

Test samples (watch band links) having a different kurtosis Rku and a different profile section height difference Rδc in a height direction between the material ratio Rmr25 and the material ratio Rmr75 were manufactured, and monitor evaluation relating to visibility of sebum was performed.

First, weighting was performed to obtain 94.8 mass % of zirconia (ZrO₂), 5.2 mass % of yttrium oxide (Y₂O₃) that is a stabilizer, and by mixing them, a material powder was obtained. Furthermore, the total of 4 mass % of chromium oxide (Cr₂O₃), iron oxide (Fe₂O₃), and cobalt oxide (Co₃O₄) were added to 100 mass % of this material powder as a pigment component, water was added thereto, and they were crushed and mixed by a bowl mill, to manufacture a slurry. The slurry was then spray dried by using a spray drier, to be made into granules.

Next, the total of 25 mass % of acrylic resin, polystyrene, ethylene-vinyl acetate copolymer, stearic acid, and butyl phthalate(DBP) were added to 100 mass % of the granules, and this was then put into a kneader. By mixing and kneading it while applying heat to 150°C, a body was obtained. Furthermore, by putting this body into a pelletizer, and pellets to be a material in injection molding were obtained. By injection molding, a molded body in a shape of a watch belt link was manufactured.

Next, the obtained molded body was degreased, and then calcined for two hours at 1400°C in atmosphere by a batch type furnace, to make a sintered body. On a surface of the sintered body, grinding process was performed by a surface grinder, using a grinder wheel of a grit size indicated in Table 1 until a desirable shape was obtained. Furthermore, on the surface subjected to the grinding process, barreling was performed. As for the barreling, a centrifugal barreling method was applied, a grindstone in a spherical shape having a diameter of 6 mm was used, abrasive grains of green carborandom of a grit size indicated in Table 1 were used, and the process was performed for 10 hours, thereby obtaining respective test samples.

For the respective obtained test samples, measurement was performed in conformity with JIS B 0601 (2001), and the kurtosis Rku, and the profile section height difference Rδc in a height direction between the material ratio Rmr25 and the material ratio Rmr75 were acquired. As measurement conditions, a laser microscope (VHX-5000, KEYENCE CORPORATION) was used, a measurement mode was set to color ultra-depth, a magnification was set to 1000 times, a pitch was set to 0.02 µm, and a gain was set to 953. Five portions having small inclination compared to other portions on a decorative surface of the respective test samples were measured. An average value of data after excluding data indicating a largest value and data indicating a smallest value from measurement data was acquired.

Moreover, monitor evaluation relating to visibility of sebum of the respective test samples was performed using the respective test samples. This monitor evaluation was performed by a method described below. First, on the decorative surface of the respective test samples, a solution of oleic acid imitating sebum was applied, and then wiped off with a cloth. Next, having a total of 50 monitors constituted of 5 each males and females of respective generations from their twenties to sixties see the decorative surface of the respective test samples, and a questionnaire survey was conducted, asking which of "nearly invisible", "difficult to be seen", "neither", "visible", and "easy to be seen" applies to the oleic acid imitating sebum. One for which 90% or more people (45 people or more) chose the answer of "nearly invisible" was rated as "excellent", one with 80% or higher and lower than 90% of people (40 to 44 people) was rated as "good", one with 60% or higher and lower than 80% of people (30 to 39 people) was rated as "acceptable", and one with lower than 60% of people (29 people or less) was rated as "poor".

The results are given in Table 1. Note that the "kurtosis Rku acquired from a roughness profile" is indicated as "Rku", and the "profile section height difference Rδc in a height direction between the material ratio Rmr25 and the material ratio Rmr75 acquired from a roughness profile" is indicated as "Rδc" in Table 1.

**[Table 1]**

| SAMPLE NO. | GRIT SIZE OF GRINDER WHEEL | GRIT SIZE OF ABRASIVE GRAINS | Rku | Rδc (µm) | MONITOR EVALUATION |
|---|---|---|---|---|---|
| 1 | #280 | #180 | 2.4 | 0.29 | POOR |
| 2 | #280 | #150 | 4.8 | 0.36 | ACCEPTABLE |
| 3 | #280 | #120 | 6.5 | 0.50 | GOOD |
| 4 | #140 | #150 | 5.5 | 0.66 | GOOD |
| 5 | #170 | #150 | 5.2 | 0.62 | GOOD |
| 6 | #400 | #150 | 4.4 | 0.30 | ACCEPTABLE |
| 7 | #600 | #150 | 3.9 | 0.21 | POOR |

From the results given in Table 1, test samples No. 2 to 6 received "acceptable" or a higher rating in the monitor evaluation. From this fact, it was found that a decorative part in which the kurtosis Rku is larger than 3 and the profile section height difference Rδc in a height direction between the material ratio Rmr25 and the material ratio Rmr75 is equal to or larger than 0.3 µm on a decorative surface is less prone to get sebum remaining thereon, and has a decorative surface, even if sebum remains thereon, on which the sebum is less noticeable also.

Furthermore, out of test samples No. 2 to 6, test samples No. 3 to 5 received "good" in the monitor evaluation. From this fact, it was found that a decorative part in which the profile section height difference Rδc is equal to or larger than 0.5 µm on the decorative surface has a decorative surface on which remaining sebum is further less noticeable.

### Example 2

Next, test samples having different ten point height of roughness profile Rz were manufactured, and monitor evaluation relating to visibility of sebum was conducted.

A manufacturing method was the same as the manufacturing method of test sample No. 5 in Example 1 except that shape and sizes of grindstones used in the barreling were as indicated in Table 2. Note that test sample No. 8 is the same as test sample No. 5 in Example 1.

The ten point height of roughness profile Rz of a decorative surface of the respective obtained test samples was then measured, under the same measurement conditions as the Example 1. Moreover, monitor evaluation relating to visibility of sebum was performed by the same method as Example 1.

Results are given in Table 3. Note that the "ten point height of roughness profile Rz acquired from a roughness profile" is indicated as "Rz" in Table 2. Moreover, the size of a grindstone in a triangle pole shape is indicated as A × B. A denotes a length of one side of a triangle, and B denotes a height. Moreover, the size of a grindstone in an oblique cylinder is indicated as C × D. C denotes a diameter of a circle, and D denotes a maximum height.

**[Table 2]**

| SAMPLE NO. | GRINDSTONE | | Rz (µm) | MONITOR EVALUATION |
|---|---|---|---|---|
| | SHAPE | SIZE (mm) | | |
| 8 | SPHERE | 6 | 2.0 | GOOD |
| 9 | TRIANGLE POLE | 3 × 3 | 3.0 | EXCELLENT |
| 10 | TRIANGLE POLE | 4 × 4 | 5.8 | EXCELLENT |
| 11 | TRIANGLE POLE | 9 × 5 | 8.0 | EXCELLENT |
| 12 | OBLIQUE CYLINDER | 4.5 × 9 | 8.6 | GOOD |

From results given in Table 2, test samples No. 9 to 11 received "excellent" in the monitor evaluation. From this fact, it was found that a decorative part in which the ten point height of roughness profile Rz on a decorative surface is equal to or larger than 3 µm and equal to or smaller than 8 µm, remaining sebum is further less noticeable.

### Example 3

Next, test samples having different ratio Rq/Ra between the arithmetical mean roughness Ra and the root mean square roughness Rq on a decorative surface were manufactured, and monitor evaluation relating to visibility of sebum was conducted.

A manufacturing method is the same as the manufacturing method of test sample No. 5 in Example 1 except that duration of the barreling was as indicated in Table 3. Note that test sample No. 13 is the same as test sample No. 5 in Example 1.

The ratio Rq/Ra between the arithmetical mean roughness Ra and the root mean square roughness Rq of a decorative surface of the respective obtained test samples was then measured, under the same measurement conditions as Example 1. Moreover, monitor evaluation relating to visibility of sebum was performed by the same method as Example 1.

Results are given in Table 3. Note that the "arithmetical mean roughness Ra acquired from a roughness profile" is indicated as "Ra", and the "root mean square roughness Rq acquired from a roughness profile" is indicated as "Rq" in Table 3.

**[Table 3]**

| SAMPLE NO. | BARRELING DURATION (HOUR) | Ra (µm) | Rq (µm) | Rq/Ra | MONITOR EVALUATION |
|---|---|---|---|---|---|
| 13 | 10 | 0.4 | 0.7 | 1.8 | GOOD |
| 14 | 20 | 0.4 | 0.6 | 1.6 | EXCELLENT |
| 15 | 30 | 0.4 | 0.5 | 1.3 | EXCELLENT |

From results given in Table 3, test samples No. 14, 15 received "excellent" in the monitor evaluation. From this fact, it was found that a decorative part in which the ratio Rq/Ra between the arithmetical mean roughness Ra and the root mean square roughness Rq on a decorative surface is equal to or smaller than 1.6, remaining sebum is further less noticeable.

### Example 4

Next, test samples having different skewness Rsk on a decorative surface were manufactured, and monitor evaluation relating to visibility of sebum was conducted.

A manufacturing method is the same as the manufacturing method of test sample No. 5 in Example 1 except that materials of a grindstone used in the barreling were as indicated in Table 4. Note that test sample No. 17 is the same as test sample No. 5 in Example 1.

The skewness Rsk of a decorative surface of the respective obtained test samples was then measured, under the same measurement conditions as Example 1. Moreover, monitor evaluation relating to visibility of sebum was performed by the same method as Example 1.

Results are given in Table 4. Note that the "skewness Rsk acquired from a roughness profile" is indicated as "Rsk" in Table 4.

**[Table 4]**

| SAMPLE NO. | MATERIAL OF ABRASIVE GRAINS | Rsk | MONITOR EVALUATION |
|---|---|---|---|
| 16 | BORON CARBIDE | NEGATIVE | EXCELLENT |
| 17 | GREEN CARBORUNDUM | POSITIVE | GOOD |

From results given in Table 4, test sample No. 16 received "excellent" in the monitor evaluation. From this fact, it was found that a decorative part in which the skewness Rsk of a decorative surface is negative, remaining sebum is further less noticeable.

### Example 5

Next, test samples having different maximum profile valley depth Rv of a decorative surface were manufactured, and monitor evaluation relating to visibility of sebum was conducted.

A manufacturing method is the same as the manufacturing method of test sample No. 5 in Example 1 except that the number of times of zero cut performed after the grinding process was as indicated in Table 5. Note that test sample No. 22 is the same as test sample No. 5 in Example 1.

The maximum profile valley depth Rv of a decorative surface of the respective obtained test samples was then measured, under the same measurement conditions as Example 1. Moreover, monitor evaluation relating to visibility of sebum was performed by the same method as

### Example 1.

Results are given in Table 5. Note that the "maximum profile valley depth Rv acquired from a roughness profile" is indicated as "Rv" in Table 5.

**[Table 5]**

| SAMPLE NO. | FREQUENCY OF ZERO CUT (TIMES) | Rv (µm) | MONITOR EVALUATION |
|---|---|---|---|
| 18 | 5 | 1.5 | GOOD |
| 19 | 4 | 2.0 | EXCELLENT |
| 20 | 3 | 3.2 | EXCELLENT |
| 21 | 2 | 4.0 | EXCELLENT |
| 22 | 0 | 4.5 | GOOD |

From results given in Table 5, test samples No. 19 to 21 received "excellent" in the monitor evaluation. From this fact, it was found that a decorative part in which the maximum profile valley depth Rv of a decorative surface is equal to or larger than 2 µm and smaller than 4 µm, remaining sebum is further less noticeable.

## Claims

1. A decorative part comprising
a decorative surface, wherein
the decorative surface has a kurtosis Rku, which is acquired from a roughness profile, larger than 3, and a profile section height difference Rδc in a height direction between a material ratio Rmr of a cut level of 25% and a material ratio Rmr of a cut level of 75%, which is acquired from the roughness profile, equal to or larger than 0.3 µm.

2. The decorative part according to claim 1, wherein
the decorative surface has the profile section height difference Rδc equal to or larger than 0.5 µm

3. The decorative part according to claim 1 or 2, wherein
the decorative surface has a ten point height of roughness profile Rz, which is acquired from the roughness profile, equal to or larger than 3 µm and equal to or smaller than 8 µm.

4. The decorative part according to any one of claims 1 to 3, wherein
the decorative surface has a ratio Rq/Ra between an arithmetical mean roughness Ra, which is acquired from the roughness profile, and a root mean square roughness Rq, which is acquired from the roughness profile, equal to or smaller than 1.6.

5. The decorative part according to any one of claims 1 to 4, wherein
the decorative surface has a negative skewness Rsk, which is acquired from a roughness profile.

6. The decorative part according to any one of claims 1 to 5, wherein
the decorative surface has a maximum profile valley depth Rv, which is acquired from a roughness profile, equal to or larger than 2 µm and equal to or smaller than 4 µm.

7. The decorative part according to any one of claims 1 to 6, wherein
the decorative surface is made from ceramics.
